# EUROPEAN PATENT APPLICATION

(11) **EP 4 715 498 A1**
(43) Date of publication of application: **25.03.2026**
(21) Application number: 23938101.5
(22) Date of filing: 07.07.2023
(51) Int. Cl.: G05B 19/042

(54) **HEATING ELEMENT POWER CONTROL CIRCUIT AND METHOD**

(30) Priority: 19.05.2023 CN 202310575920
(71) Applicant: Airmate Electrical (Shen Zhen) Co., Ltd., Shenzhen, Guangdong 518108 (CN)
(72) Inventor: SHIH, Jui Pin, Shenzhen, Guangdong 518108 (CN); YIN, Yiwen, Shenzhen, Guangdong 518108 (CN)
(74) Representative: Bayramoglu et al.
(86) International application number: PCT/CN2023/106335
(87) International publication number: WO 2024/239432

(57) **Abstract**

A heating element power control circuit and a control method using the same are provided. The circuit includes a zero-crossing detection module (1), a microcontroller (3), a switch control module (4), a switch module (5), and a heating element (6). A first terminal of the zero-crossing detection module (1) is connected to a neutral line, a second terminal is connected to a first terminal of the microcontroller (3), and a third terminal is connected to a live line. A second terminal of the microcontroller (3) is connected to a first terminal of the switch control module (4). A second terminal of the switch control module (4) is connected to a first terminal of the switch module (5). A second terminal of the switch module (5) is connected to the live line, and a third terminal of the switch module (5) is connected to a first terminal of the heating element (6). A second terminal of the heating element (6) is connected to the neutral line. The microcontroller (3), upon receiving a a zero-crossing from the zero-crossing detection module (1), sends a control signal to the switch control module (4) based on a preset temperature signal. The control signal includes the number of the waveforms to be conducted by the switch module (5) during the preset number of the work cycles, and the switch control module (4) receives the control signal and controls the conduction state and the conduction time of the switch module (5) based on the control signal.

## Description

### CROSS-REFERENCE TO RELATED APPLICATIONS

This application claims priority to Chinese Patent Application No. 202310575920.5, filed with the Chinese Patent Office on May 19, 2023 and entitled "HEATING ELEMENT POWER CONTROL CIRCUIT AND CONTROL METHOD USING THE SAME", which is incorporated herein by reference in its entirety.

### TECHNICAL FIELD

The present disclosure relates to a field of power control, and in particular to a heating element power control circuit and a control method using the same.

### BACKGROUND

With development of economy and improvement of living standards, use of various heating devices has become increasingly common. Current heating devices mainly employ light-emitting heating elements and non-light-emitting heating elements. Heating element power in such devices is typically regulated by controlling a conduction phase angle of a silicon-controlled rectifier. However, this type of power regulation generates electromagnetic interference (EMI) in a power supply, resulting in difficulties in electromagnetic compatibility (EMC) mitigation.

### SUMMARY

In a first aspect, the present disclosure provides a heating element power control circuit, including a zero-crossing detection module, a microcontroller, a switch control module, a switch module, and a heating element; where
a first terminal of the zero-crossing detection module is connected to a neutral line, a second terminal of the zero-crossing detection module is connected to a first terminal of the microcontroller, a third terminal of the zero-crossing detection module is connected to a live line, and a fourth terminal of the zero-crossing detection module is grounded; a second terminal of the microcontroller is connected to a first terminal of the switch control module; a second terminal of the switch control module is connected to a first terminal of the switch module, and a third terminal of the switch control module is grounded; a second terminal of the switch module is connected to the live line, and a third terminal of the switch module is connected to a first terminal of the heating element; a second terminal of the heating element is connected to the neutral line;
the zero-crossing detection module is configured to detect a voltage signal and provide a zero-crossing signal to the microcontroller upon detecting a zero-crossing point of the voltage signal;
the microcontroller is configured to, upon receiving the zero-crossing signal, send a control signal to the switch control module based on a preset temperature signal, where the control signal includes an integer number of complete waveforms to be conducted by the switch module during a preset number of work cycles; and
the switch control module is configured to receive the control signal and control a conduction state and a conduction time of the switch module based on the control signal to further control power of the heating element.

In some embodiments, the circuit further includes a voltage regulation module, where
a first terminal of the voltage regulation module is connected to the live line, and a second terminal of the voltage regulation module is connected to a third terminal of the microcontroller; and
the voltage regulation module is configured to provide a regulated power supply to the microcontroller.

In some embodiments, the zero-crossing detection module includes a first resistor, a second resistor, a third resistor, a fourth resistor, a fifth resistor, a sixth resistor, a diode, a capacitor, and a first NPN transistor, where
a first terminal of the first resistor is connected to the neutral line and the second terminal of the heating element, and a second terminal of the first resistor is connected to a first terminal of the second resistor;
a second terminal of the second resistor is connected to a first terminal of the third resistor, and a second terminal of the third resistor is connected to a first terminal of the fourth resistor, a cathode of the diode, and a base of the first NPN transistor;
a second terminal of the fourth resistor is connected to an anode of the diode, an emitter of the first NPN transistor, and a first terminal of the capacitor;
a second terminal of the capacitor is connected to the first terminal of the microcontroller;
the second terminal of the fourth resistor, the emitter of the first NPN transistor, the first terminal of the capacitor, and the anode of the diode are grounded;
a collector of the first NPN transistor is connected to a first terminal of the fifth resistor and a first terminal of the sixth resistor; and
a second terminal of the fifth resistor is connected to the live line, and a second terminal of the sixth resistor is connected to the first terminal of the microcontroller and the second terminal of the capacitor.

In some embodiments, the switch control module includes a seventh resistor, an eighth resistor, a ninth resistor, and a second NPN transistor, where
a first terminal of the seventh resistor is connected to the second terminal of the microcontroller, and a second terminal of the seventh resistor is connected to a first terminal of the eighth resistor and a base of the second NPN transistor;
a second terminal of the eighth resistor is connected to an emitter of the second NPN transistor;
a collector of the second NPN transistor is connected to a first terminal of the ninth resistor;
a second terminal of the ninth resistor is connected to the first terminal of the switch module;
the second terminal of the eighth resistor and the emitter of the second NPN transistor are grounded.

In some embodiments, the switch module includes a triac.

In a second aspect, the present disclosure provides a heating element power control method performed by the microcontroller, including:
upon receiving the zero-crossing signal from the zero-crossing detection module, sending the control signal to the switch control module based on the preset temperature signal, to receive the control signal by the switch control module; and controlling the conduction state and the conduction time of the switch module based on the control signal to further control the power of the heating element, where the control signal includes the integer number of the complete waveforms to be conducted by the switch module during the preset number of the work cycles.

In some embodiments, the sending the control signal to the switch control module based on the preset temperature signal including:
determining the preset temperature signal based on a user-selected heating mode;
determining, based on the preset temperature signal, a number of half-sine waves to be conducted by the switch module during the preset number of the work cycles, where the number of the half-sine waves is included in a to-be-transmitted control signal; and
sending the control signal to the switch control module.

In some embodiments, the work cycle has a duration less than or equal to a preset cycle duration, such that an operating frequency of the heating element is greater than a flicker fusion frequency of a human eye.

In some embodiments, the work cycle is a period of a corresponding one of the half-sine waves.

In some embodiments, the circuit provided by embodiments of the present disclosure, upon receiving the zero-crossing signal from the zero-crossing detection module, the microcontroller sends the control signal to the switch control module based on the preset temperature signal, where the control signal includes the integer number of the complete waveforms to be conducted by the switch module during the preset number of the work cycles; the switch control module is configured to receive the control signal and control the conduction state and the conduction time of the switch module based on the control signal to further control the power of the heating element. Since the control signal sent by the microcontroller to the switch control module includes the integer number of the complete waveforms to be conducted by the switch module during the preset number of the work cycles, the control method of the present disclosure adjusts the power of the heating element in a heating device by regulating a number of the complete waveforms conducted by the switch module during the preset number of the work cycles. Such approach solves a problem in the prior art where power regulation methods cause a power supply to generate electromagnetic interference (EMI) and complicating electromagnetic compatibility (EMC) mitigation, thereby achieving reduced EMI and simplified EMC compliance.

### BRIEF DESCRIPTION OF DRAWINGS

Accompanying drawings, which are incorporated in and constitute a part of this specification, illustrate embodiments consistent with the present disclosure and, together with description, serve to explain principles of the present disclosure.

To more clearly illustrate technical solutions in the embodiments of the present disclosure, following briefly describes drawings required for describing the embodiments. Obviously, those skilled in the art may derive other drawings from these provided drawings without creative effort.

One or more embodiments are illustratively described through pictures in corresponding accompanying drawings. These exemplary descriptions do not limit the embodiments. Elements represented by the same reference numerals in the drawings are considered similar elements. Unless otherwise stated, the figures in the drawings are not drawn to scale.
FIG. 1 is a schematic diagram of a heating element power control circuit according to one embodiment of the present disclosure.
FIG. 2 is another schematic diagram of the heating element power control circuit according to one embodiment of the present disclosure.
FIG. 3 is another schematic diagram of the heating element power control circuit according to one embodiment of the present disclosure.

### DETAILED DESCRIPTION

To make objectives, technical solutions, and advantages of the embodiments of the present disclosure clearer, technical solutions in the embodiments of the present disclosure are clearly and completely described below with reference to accompanying drawings in the embodiments of the present disclosure. Obviously, the described embodiments are some rather than all of the embodiments of the present disclosure. All other embodiments obtained by those skilled in the art based on the embodiments of the present disclosure without creative efforts shall fall within a protection scope of the present disclosure.

Following disclosure provides many different embodiments or examples for implementing different structures of the present disclosure. To simplify the present disclosure, components and settings of specific examples are described below. Of course, they are merely examples and are not intended to limit the present disclosure. In addition, the present disclosure may repeat reference numerals and/or letters in different examples. This repetition is for a purpose of simplicity and clarity and does not in itself dictate a relationship between various embodiments and/or arrangements discussed.

In conventional heating devices, heating element power is regulated by adjusting a conduction phase angle of a silicon-controlled rectifier. This approach essentially controls a duty cycle of the heating element during each alternating current (AC) half-cycle by chopping each half-sine wave. However, this waveform chopping causes the AC power supply to generate electromagnetic interference (EMI), which complicates Electromagnetic Compatibility (EMC) mitigation. To address technical problems of EMI generation and difficult EMC mitigation in conventional heating element power regulation methods, the present disclosure provides a heating element power control circuit and a control method using the same to achieve reduced EMI generation in the power supply and simplify EMC compliance.

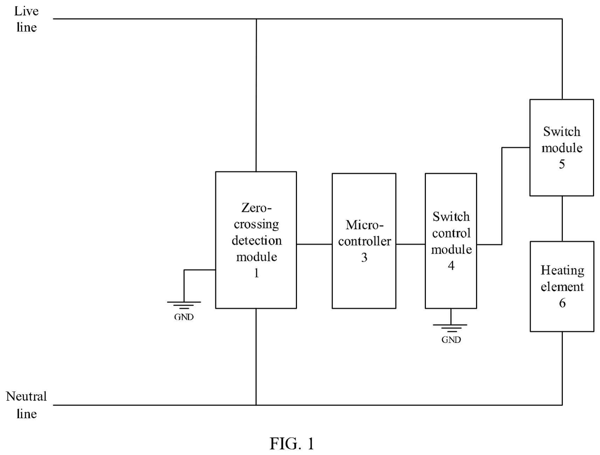

FIG. 1 is a schematic diagram of a heating element power control circuit according to one embodiment of the present disclosure. As shown in FIG. 1, the present disclosure provides a heating element power control circuit, including a zero-crossing detection module 1, a microcontroller 3, a switch control module 4, a switch module 5, and a heating element 6.

A first terminal of the zero-crossing detection module 1 is connected to a neutral line of an AC mains supply, a second terminal of the zero-crossing detection module 1 is connected to a first terminal of the microcontroller 3, a third terminal of the zero-crossing detection module 1 is connected to a live line of the AC mains supply, and a fourth terminal of the zero-crossing detection module 1 is grounded. Specifically, the AC mains supply is a 220 V, 50 Hz alternating current (AC).

A second terminal of the microcontroller 3 is connected to a first terminal of the switch control module 4.

A second terminal of the switch control module 4 is connected to a first terminal of the switch module 5, and a third terminal of the switch control module 4 is grounded.

A second terminal of the switch module 5 is connected to the live line of the AC mains supply, and a third terminal of the switch module 5 is connected to a first terminal of the heating element 6.

A second terminal of the heating element 6 is connected to the neutral line of the AC mains supply.

The zero-crossing detection module 1 is configured to detect a rectified voltage signal, i.e., to detect whether a voltage of the AC mains supply crosses a zero point, and to provide a zero-crossing signal to the microcontroller 3 upon detecting a zero-crossing point of the AC mains supply.

The microcontroller 3, upon receiving the zero-crossing signal provided by the zero-crossing detection module 1, reads the zero-crossing signal, and then send a control signal to the switch control module 4 based on a preset temperature signal.

Specifically, the control signal includes an integer number of complete waveforms to be conducted by the switch module 5 during a preset number of work cycles.

It is to be noted that waveforms to be conducted by the switch module 5 are complete waveforms, not chopped waveforms, thereby reducing EMI generated by the power supply.

The switch control module 4 receives the control signal sent by the microcontroller 3 and control a conduction state and a conduction time of the switch module 5 based on the control signal to further control power of the heating element 6.

It is to be noted that a greater number of waveforms, specified in the control signal for conduction by the switch module 5 during the preset number of the work cycles, results in a longer conduction time of the switch module 5, thereby yielding a higher power for the heating element 6 of a heating device.

In the embodiments of the present disclosure, upon receiving the zero-crossing signal provided by the zero-crossing detection module, the microcontroller determines the control signal based on the preset temperature signal. The control signal specifies the integer number of the complete waveforms to be conducted by the switch module during the preset number of the work cycles. The microcontroller sends the control signal to the switch control module to control the conduction state and the conduction time of the switch module, thereby controlling the power of the heating element. By controlling the power of the heating element through the integer number of the complete waveforms to be conducted by the switch module during the preset number of the work cycles, the EMI generated by the power supply is reduced, thereby simplifying EMC compliance.

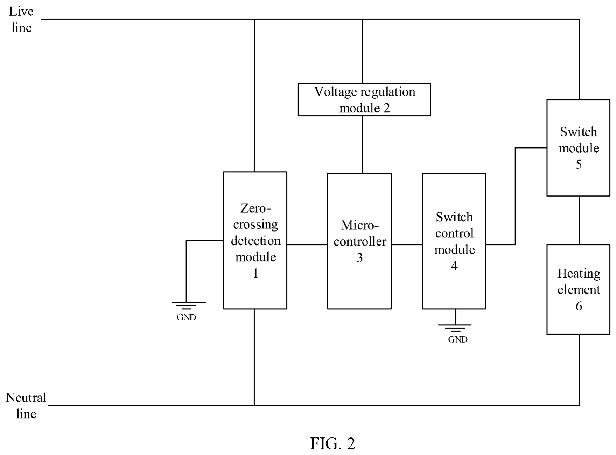

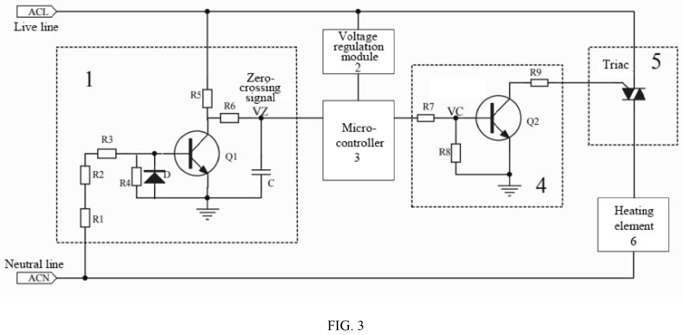

The embodiments of the present disclosure are further described in detail below with reference to the circuit shown in FIGS. 2 and 3.

As shown in FIG. 2, the heating element power control circuit of the present disclosure further includes a voltage regulation module 2.

A first terminal of the voltage regulation module 2 is connected to the live line, and a second terminal of the voltage regulation module 2 is connected to a third terminal of the microcontroller 3.

The voltage regulation module 2 is connected to the microcontroller 3 and configured to provide a regulated power supply to the microcontroller 3.

In some embodiments, the voltage regulation module 2 is configured to provide a 5 V regulated power supply to the microcontroller 3.

As shown in FIG. 3, the zero-crossing detection module includes a first resistor R1, a second resistor R2, a third resistor R3, a fourth resistor R4, a fifth resistor R5, a sixth resistor R6, a diode D, a capacitor C, and a first NPN transistor Q1.

A first terminal of the first resistor R1 is connected to the neutral line of the AC mains supply and the second terminal of the heating element 6, and a second terminal of the first resistor R1 is connected to a first terminal of the second resistor R2. A second terminal of the second resistor R2 is connected to a first terminal of the third resistor R3, and a second terminal of the third resistor R3 is connected to a first terminal of the fourth resistor R4, a cathode of the diode D, and a base of the first NPN transistor Q1. A second terminal of the fourth resistor R4 is connected to an anode of the diode D, an emitter of the first NPN transistor Q1, and a first terminal of the capacitor C. A second terminal of the capacitor C is connected to the first terminal of the microcontroller 2. The second terminal of the fourth resistor R4, the emitter of the first NPN transistor Q1, the first terminal of the capacitor C, and the anode of the diode D are grounded. A collector of the first NPN transistor Q1 is connected to a first terminal of the fifth resistor R5 and a first terminal of the sixth resistor R6. A second terminal of the fifth resistor R5 is connected to the live line of the AC mains supply, and a second terminal of the sixth resistor R6 is connected to the first terminal of the microcontroller 3 and the second terminal of the capacitor C.

The switch control module 4 includes a seventh resistor R7, an eighth resistor R8, a ninth resistor R9, and a second NPN transistor Q2.

A first terminal of the seventh resistor R7 is connected to the second terminal of the microcontroller 3, and a second terminal of the seventh resistor R7 is connected to a first terminal of the eighth resistor R8 and a base of the second NPN transistor Q2. A second terminal of the eighth resistor R8 is connected to an emitter of the second NPN transistor Q2. A collector of the second NPN transistor Q2 is connected to a first terminal of the ninth resistor R9. A second terminal of the ninth resistor R9 is connected to the first terminal of the switch module 5. The second terminal of the eighth resistor R8 and the emitter of the second NPN transistor Q2 are grounded.

The control signal sent by the microcontroller 3 substantially controls conduction of the second NPN transistor Q2. The NPN transistor provides current amplification, thereby enabling control of the switch module 5. Different control signals may control the switch module 5 to conduct a different number of the complete waveforms during the preset number of the work cycles. A greater number of the complete waveforms conducted by the switch module 5 during the preset number of work cycles results in a higher heating power of the heating element in the heating device.

In some embodiments, the switch module 5 includes a triac.

In some embodiments, the ninth resistor R9 in the switch control module 4 is connected to a gate of the triac, an anode of the triac is connected to the live line of the AC mains supply, and a cathode of the triac is connected to the first terminal of the heating element.

It is understood that the microcontroller 3 controls an operation of the switch control module 4, the switch control module 4 controls an operation of the triac, and conduction of the triac controls an operation of the heating element 6.

It should be noted that the heating element power control circuit provided by the present disclosure is simpler and has lower cost compared to conventional heating element power control circuits.

In another embodiments of the present disclosure provides a method for controlling heating element power using the circuit as foregoing performed by the microcontroller 3 including following steps.

Upon receiving the zero-crossing signal from the zero-crossing detection module 1, sending the control signal to the switch control module 4 based on the preset temperature signal, to receive the control signal by the switch control module 4. Controlling the conduction state and the conduction time of the switch module 5 based on the control signal to further control the power of the heating element 6, where the control signal includes the integer number of the complete waveforms to be conducted by the switch module during the preset number of the work cycles.

In the heating element power control circuit provided by embodiments of the present disclosure, upon receiving the zero-crossing signal from the zero-crossing detection module, the microcontroller sends the control signal to the switch control module based on the preset temperature signal. The control signal includes the integer number of the complete waveforms to be conducted by the switch module during the preset number of the work cycles. The switch control module is configured to receive the control signal and control the conduction state and the conduction time of the switch module based on the control signal to further control the power of the heating element. Since the control signal sent by the microcontroller to the switch control module includes the integer number of the complete waveforms to be conducted by the switch module during the preset number of the work cycles, the control method of the present disclosure regulates the power of the heating element in the heating device by regulating a number of the complete waveforms conducted by the switch module during the preset number of the work cycles. Such approach solves a problem in the prior art where power regulation methods cause the AC power supply to generate the EMI and complicating the EMC mitigation, thereby achieving reduced EMI and simplified EMC compliance.

In some embodiments, the zero-crossing detection module 1 detects the voltage signal of the AC mains supply. Upon detecting the zero-crossing point of the voltage signal of the AC mains supply, the zero-crossing detection module generates the zero-crossing signal and sends the zero-crossing signal to the microcontroller 3.

The microcontroller 3 receives the zero-crossing signal and, based on the preset temperature signal, sends the control signal to the switch control module 4. It should be noted that the preset temperature signal is determined by a heating mode input by a user, that is, the preset temperature signal is set by the user on the microcontroller 3. Alternatively, the preset temperature signal is automatically set by the microcontroller 3 according to indoor/outdoor ambient temperatures or temperatures of an indoor evaporator copper pipe

The embodiments of the present disclosure are further described below by taking the preset temperature signal being determined based on a user-selected heating mode as an example.

In some embodiments, after determining the preset temperature signal based on a user-selected heating mode, the control method further includes following steps.

Determining, based on the preset temperature signal, a number of half-sine waves to be conducted by the switch module during the preset number of the work cycles, where the number of the half-sine waves is included in a to-be-transmitted control signal.

Sending the control signal to the switch control module.

It is understood that the complete waveforms are the half-sine waves or half-cosine waves. Taking a case where the complete waveforms are the half-sine waves as an example, once the preset temperature signal is determined, the number of half-sine waves to be conducted by the switch module during preset number of work cycles is determined based on the preset temperature signal.

In some embodiments, the work cycle is a period of a corresponding one of the half-sine waves.

The microcontroller sends a determined control signal to the switch control module, that is, the microcontroller transmits a determined integer number of the half-sine waves to be conducted by the switch module during the preset number of the work cycles, so as to enable the switch control module to control the conduction state and the conduction time of the switch module based on the control signal, thereby further controlling the power of the heating element.

In some embodiments, as shown in Table 1, the preset number of the work cycles may be three work cycles, with each of the three work cycles being a period of a corresponding one of the half-sine waves. The user-selected heating mode involves the user inputting heating mode selection signals, where the heating mode selection signals includes different heating level selection signals.

**Table 1**

| Heating level | Conducted waveform during three work cycles | | | | | | Theoretical power |
|---|---|---|---|---|---|---|---|
| | 1 | 2 | 3 | 4 | 5 | 6 | |
| Level 1 | 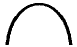 | | | 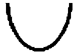 | | | 1/3× maximum power |
| Level 2 | 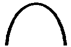 | 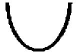 | | 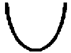 | 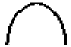 | | 2/3× maximum power |
| Level 3 | 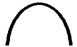 | 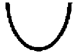 | 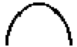 | 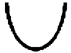 | 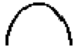 | 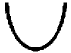 | Maximum power |

It should be noted that the microcontroller determines the control signal based on user-selected heating level signals.

In some embodiments, the user-selected heating level signals correspond to Level 1, Level 2, or Level 3, where the Level 1 is the lowest setting and the Level 3 is the highest setting. It is understood that a number of the user-selected heating level signals corresponds to the preset number of the work cycles.

In some embodiments, when the user-selected heating level signals correspond to the Level 1, the control signal specifies one half-sine wave for the switch module to conduct per three work cycles, that is, one out of every three half-sine waves is conducted.

As shown in Table 1, the switch module conducts during a first work cycle out of every three work cycles and remains off during remaining two work cycles. When the switch module conducts one half-sine wave during the three work cycles, the power of the heating element is one-third of a maximum heating power.

When the user-selected heating level signals correspond to the Level 2, the control signal specifies two half-sine waves for the switch module to conduct during the three work cycles, that is, two out of every three half-sine waves are conducted.

As shown in Table 1, the switch module conducts during first two work cycles of the three work cycles and remains off during remaining one work cycle. When the switch module conducts two half-sine waves during the three work cycles, the power of the heating element is two-thirds of the maximum heating power.

When the user-selected heating level signals correspond to the Level 3, the control signal specifies three half-sine waves for the switch module to conduct during the three work cycles, that is, three out of every three half-sine waves are conducted.

It should be noted that the switch module remains in a conducting state throughout the three work cycles. When the switch module conducts the three half-sine waves during three work cycles, the power of the heating element reaches the maximum heating power.

In some embodiments, the user-selected heating level signals corresponding to Level 1, Level 2, Level 3, or Level 4, where the Level 1 is the lowest setting and the Level 4 is the highest setting.

As shown in Table 2, the preset number of the work cycles are four work cycles, with each of the four work cycles being a period of a corresponding one of the half-sine waves.

**Table 2**

| Heating level | Conducted waveform during four work cycles | | | | | | | | Theoretical power |
|---|---|---|---|---|---|---|---|---|---|
| | 1 | 2 | 3 | 4 | 5 | 6 | 7 | 8 | |
| Level 1 | 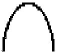 | | | | 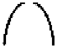 | | | | 1/4× maximum power |
| Level 2 | 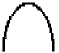 | 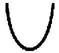 | | | 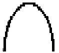 | 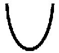 | | | 2/4× maximum power |
| Level 3 | 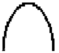 | 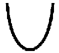 | 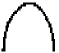 | | 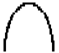 | 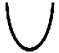 | 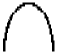 | | 3/4× maximum power |
| Level 4 | 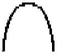 | 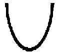 | 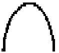 | 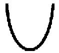 | 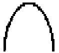 | 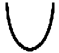 | 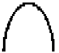 | 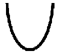 | Maximum power |

In some embodiments, when the user-selected heating level signals correspond to Level 1, the control signal specifies one half-sine wave for the switch module to conduct during the four work cycles, that is, one out of every four half-sine waves is conducted.

It should be noted that the switch module conducts during a first work cycle out of the four work cycles and remains off during remaining three work cycles. When the switch module conducts one half-sine wave during the four work cycles, the power of the heating element is one-quarter of the maximum heating power.

When the user-selected heating level signals correspond to the Level 2, the control signal specifies two half-sine waves for the switch module to conduct during the four work cycles, that is, two out of every four half-sine waves are conducted.

It should be noted that the switch module conducts during first two work cycles out of the four work cycles and remains off during remaining two work cycles. When the switch module conducts two half-sine waves during the four work cycles, the power of the heating element is one-half of the maximum heating power.

When the user-selected heating level signals correspond to the Level 3, the control signal specifies three half-sine waves for the switch module to conduct during the four work cycles, that is, three out of every four half-sine waves are conducted.

It should be noted that the switch module conducts during first three work cycles out of the four work cycles and remains off during remaining one work cycle. When the switch module conducts three half-sine waves during the four work cycles, the power of the heating element is three-quarters of the maximum heating power.

When the user-selected heating level signals correspond to the Level 4, the control signal specifies four half-sine waves for the switch module to conduct during the four work cycles, that is, four out of every four half-sine waves are conducted.

It should be noted that the switch module remains in a conducting state throughout the four work cycles. When the switch module conducts four half-sine waves during the four work cycles, the power of the heating element reaches the maximum heating power.

In some embodiments, the work cycle has a duration less than or equal to a preset cycle duration, such that an operating frequency of the heating element is greater than a flicker fusion frequency of a human eye.

It should be noted that, when the heating element of the heating device is a light-emitting heating element, the duration of each of the work cycles is set to be less than or equal to the preset cycle duration to reduce flickering of the light-emitting heating element, thereby enhancing user experience.

In some embodiments, the flicker fusion frequency of the human eye is generally 24 Hz. The duration of the work cycles is set to less than or equal to 40 ms, such that the operating frequency of the heating element is greater than or equal to 25 Hz, which exceeds the flicker fusion frequency of the human eye. Consequently, flickering of the light-emitting heating element becomes imperceptible to the human eye, thereby the improving user experience.

It is to be understood that terminologies used in the present disclosure is for a purpose of describing particular example embodiments only and is not intended to be limiting. As used herein, singular forms "a", "an", and "the" are intended to include plural forms as well, unless a context clearly indicates otherwise. Terms "comprise", "include", "define", and "have" are inclusive and therefore specify presence of stated features, steps, operations, elements, and/or components, but do not preclude presence or addition of one or more other features, steps, operations, elements, components, and/or groups thereof. Method steps, processes, and operations described in the present disclosure are not to be construed as necessarily requiring their performance in a particular order described or illustrated, unless an order of execution is explicitly indicated. It is also to be understood that additional or alternative steps may be used.

The above are only specific implementations of the present disclosure, so that those skilled in the art can understand or implement the present disclosure. Various modifications to these embodiments are readily apparent to those skilled in the art, and general principles defined in the present disclosure may be implemented in other embodiments without departing from a spirit or scope of the present disclosure. Thus, the present disclosure is not to be limited to the embodiments shown herein but is to be accorded the widest scope consistent with principles and novel features described herein.

## Claims

1. A heating element power control circuit, **characterized by** comprising: a zero-crossing detection module; a microcontroller; a switch control module; a switch module; and a heating element; wherein
a first terminal of the zero-crossing detection module is connected to a neutral line, a second terminal of the zero-crossing detection module is connected to a first terminal of the microcontroller, a third terminal of the zero-crossing detection module is connected to a live line, and a fourth terminal of the zero-crossing detection module is grounded;
a second terminal of the microcontroller is connected to a first terminal of the switch control module;
a second terminal of the switch control module is connected to a first terminal of the switch module, and a third terminal of the switch control module is grounded;
a second terminal of the switch module is connected to the live line, and a third terminal of the switch module is connected to a first terminal of the heating element;
a second terminal of the heating element is connected to the neutral line;
the zero-crossing detection module is configured to detect a voltage signal and provide a zero-crossing signal to the microcontroller upon detecting a zero-crossing point of the voltage signal;
the microcontroller is configured to, upon receiving the zero-crossing signal, send a control signal to the switch control module based on a preset temperature signal, wherein the control signal comprises an integer number of complete waveforms to be conducted by the switch module during a preset number of work cycles; and
the switch control module is configured to receive the control signal and control a conduction state and a conduction time of the switch module based on the control signal to further control power of the heating element.

2. The circuit according to claim 1, **characterized in that** the circuit further comprises a voltage regulation module; wherein
a first terminal of the voltage regulation module is connected to the live line, and a second terminal of the voltage regulation module is connected to a third terminal of the microcontroller; and
the voltage regulation module is configured to provide a regulated power supply to the microcontroller.

3. The circuit according to claim 1 or 2, **characterized in that** the zero-crossing detection module comprises a first resistor, a second resistor, a third resistor, a fourth resistor, a fifth resistor, a sixth resistor, a diode, a capacitor, and a first NPN transistor; wherein
a first terminal of the first resistor is connected to the neutral line and the second terminal of the heating element, and a second terminal of the first resistor is connected to a first terminal of the second resistor;
a second terminal of the second resistor is connected to a first terminal of the third resistor, and a second terminal of the third resistor is connected to a first terminal of the fourth resistor, a cathode of the diode, and a base of the first NPN transistor;
a second terminal of the fourth resistor is connected to an anode of the diode, an emitter of the first NPN transistor, and a first terminal of the capacitor;
a second terminal of the capacitor is connected to the first terminal of the microcontroller;
the second terminal of the fourth resistor, the emitter of the first NPN transistor, the first terminal of the capacitor, and the anode of the diode are grounded;
a collector of the first NPN transistor is connected to a first terminal of the fifth resistor and a first terminal of the sixth resistor; and
a second terminal of the fifth resistor is connected to the live line, and a second terminal of the sixth resistor is connected to the first terminal of the microcontroller and the second terminal of the capacitor.

4. The circuit according to any of claims 1 to 3, **characterized in that** the switch control module comprises a seventh resistor, an eighth resistor, a ninth resistor, and a second NPN transistor; wherein
a first terminal of the seventh resistor is connected to the second terminal of the microcontroller, and a second terminal of the seventh resistor is connected to a first terminal of the eighth resistor and a base of the second NPN transistor;
a second terminal of the eighth resistor is connected to an emitter of the second NPN transistor;
a collector of the second NPN transistor is connected to a first terminal of the ninth resistor;
a second terminal of the ninth resistor is connected to the first terminal of the switch module; and
the second terminal of the eighth resistor and the emitter of the second NPN transistor are grounded.

5. The circuit according to any of claims 1 to 4, **characterized in that** the switch module comprises a triac.

6. A method for controlling heating element power using the circuit according to any of claims 1 to 5 performed by the microcontroller, **characterized by** comprising:
upon receiving the zero-crossing signal from the zero-crossing detection module, sending the control signal to the switch control module based on the preset temperature signal, to receive the control signal by the switch control module; and controlling the conduction state and the conduction time of the switch module based on the control signal to further control the power of the heating element; wherein the control signal comprises the integer number of the complete waveforms to be conducted by the switch module during the preset number of the work cycles.

7. The method according to claim 6, **characterized in that** the sending the control signal to the switch control module based on the preset temperature signal comprises:
determining the preset temperature signal based on a user-selected heating mode;
determining, based on the preset temperature signal, a number of half-sine waves to be conducted by the switch module during the preset number of the work cycles, wherein the number of the half-sine waves is comprised in a to-be-transmitted control signal; and
sending the control signal to the switch control module.

8. The method according to claim 6 or 7, **characterized in that** the work cycle has a duration less than or equal to a preset cycle duration, such that an operating frequency of the heating element is greater than a flicker fusion frequency of a human eye.

9. The method according to any of claims 6 to 8, **characterized in that** the work cycle is a period of a corresponding one of the half-sine waves.
